(19) Europäisches Patentamt
European Patent Office
Office européen des brevets

(11) **EP 3 672 200 B1**

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(51) Internationale Patentklassifikation (IPC):
**H04L 29/08** *(2006.01)*  **H04W 4/70** *(2018.01)*
**H04W 84/18** *(2009.01)*

(21) Anmeldenummer: **18213662.2**

(22) Anmeldetag: **18.12.2018**

(52) Gemeinsame Patentklassifikation (CPC):
**H04L 67/10; H04W 4/70; H04W 84/18**

(54) **VERFAHREN ZUR ZUSAMMENARBEIT VON MEHREREN GERÄTEN EINES LOKALEN NETZWERKS**

METHOD FOR COLLABORATION OF MULTIPLE DEVICES IN A LOCAL NETWORK

PROCÉDÉ DE COOPÉRATION D'UNE PLURALITÉ D'APPAREIL D'UN RÉSEAU LOCAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.06.2020 Patentblatt 2020/26**

(73) Patentinhaber: **Siemens Aktiengesellschaft 80333 München (DE)**

(72) Erfinder: **Schall, Daniel 1220 Wien (AT)**

(56) Entgegenhaltungen:
**US-A1- 2017 331 831**

• **FEI LI ET AL: "Microservice Patterns for the Life Cycle of Industrial Edge Software", PATTERN LANGUAGES OF PROGRAMS, ACM, 2 PENN PLAZA, SUITE 701NEW YORKNY10121-0701USA, 4. Juli 2018 (2018-07-04), Seiten 1-11, XP058426314, DOI: 10.1145/3282308.3282313 ISBN: 978-1-4503-6387-7**

**Beschreibung**

GEBIET DER ERFINDUNG

Die vorliegende Erfindung betrifft ein Verfahren zur Zusammenarbeit von mehreren Geräten eines lokalen Netzwerks, wobei Daten eines Geräts direkt einem anderen Gerät des lokalen Netzwerks übermittelt werden, wobei die Geräte jeweils über einen Rechner mit Software-Anwendungen zur Verarbeitung der Daten des Geräts verfügen, wobei das lokale Netzwerk mit einem Cloud-Netzwerk in Verbindung steht, welches Back-End-Dienste für die Verarbeitung der Daten aus dem lokalen Netzwerk ausführt.

Die vorliegende Erfindung wird insbesondere im Zusammenhang mit dem sogenannten Internet of Things (IoT) eingesetzt.

STAND DER TECHNIK

Das sogenannte Internet der Dinge (engl. Internet of Things, IoT) umfasst ein Netzwerk von physischen Geräten, wie Sensoren oder Aktuatoren. Die Geräte sind mit Elektronik, Software und einer Netzwerkverbindung versehen, welches diesen Geräten ermöglicht, eine Verbindung herzustellen und Daten auszutauschen. Sogenannte Plattformen ermöglichen es dem Anwender, seine Geräte und physische Daten-Infrastruktur, also sein lokales Netzwerk, mit der digitalen Welt zu verbinden, also mit einem weiteren Netzwerk, in der Regel ein sogenanntes Cloud-Netzwerk.

Das Cloud-Netzwerk kann aus mehreren unterschiedlichen Cloud Plattformen bestehen, welche üblicherweise von verschiedenen Anbietern angeboten werden. Eine Cloud Plattform stellt IT-Infrastruktur, wie beispielsweise Speicherplatz, Rechenleistung oder Anwendungssoftware, als Dienstleistung über das Internet zur Verfügung. Das Cloud-Netzwerk umfasst das sogenannte Back-End und bietet Back-End-Dienste an. Das lokale Netzwerk inklusive lokaler Rechenressourcen wird auch als Edge bezeichnet. Rechenressourcen am Edge sind besonders für die dezentrale Datenverarbeitung geeignet.

Grundsätzlich gibt es verschiedene Möglichkeiten, wie die Geräte des IoT miteinander und/oder mit dem Cloud-Netzwerk verbunden sein können: von Gerät zu Gerät (engl. device-to-device), vom Gerät zum Cloud-Netzwerk (engl. device-to-cloud) und vom Gerät zu einem Gateway (engl. device-to-gateway). Ein Gateway ist eine Hard- und/oder Software-Komponente, welche zwischen zwei Netzwerken eine Verbindung herstellt, also hier zwischen dem lokalen Netzwerk und dem Cloud-Netzwerk. Die vorliegende Erfindung bezieht sich auf die Kommunikation von Gerät zu Gerät.

Das Internet der Dinge soll auch im Bereich der Industrie angewendet werden. Die dafür verwendete Architektur weist im Wesentlichen drei Ebenen auf: die erste Ebene mit den einzelnen physischen Geräten, also ein lokales Netzwerk, einschließlich Gateways und Software-Bibliotheken für herkömmliche Geräte; die zweite Ebene als Cloud-Plattform mit Back-End-Diensten, welche grundlegende Funktionalitäten des Internets der Dinge zur Verfügung stellt, wie die Kommunikation mit den Geräten des lokalen Netzwerks, Datenspeicherung und Datenvisualisierung; die dritte Ebene, wo Anwendungen entwickelt und implementiert werden, welche mit den Daten der ersten Ebene arbeiten. Diese Architektur ist für eine weitergehende Analytik des lokalen Netzwerks und für eine Optimierung des lokalen Netzwerks nicht ausreichend. Deshalb wird zwischen der ersten Ebene der physischen Geräte und der zweiten Ebene der Cloud-Plattform mit Back-End-Diensten noch eine sogenannte Edge-Computing-Ebene eingezogen, die auch als Edge-Plattform bezeichnet wird. Die Edge-Plattform ist, im Gegensatz zum Cloud Computing in der Cloud-Plattform, eine dezentrale Datenverarbeitung am Rand des lokalen Netzwerks. Es werden also nicht alle Rohdaten der Geräte einfach in die Cloud-Plattform gesendet, sondern in der Edge-Plattform vorverarbeitet, welche dafür entsprechende Software-Anwendungen besitzt. Die Edge-Plattform kann dazu eigene Edge-Geräte besitzen oder bestehende Geräte des lokalen Netzwerks verwenden. Auch wenn solche Edge-Geräte bereits mittels Maschinenlernen Analysen durchführen und Schlussfolgerungen ziehen können, ist eine Zusammenarbeit von mehreren Edge-Geräten und eine Kommunikation zwischen Edge-Geräten für diese Zwecke noch nicht üblich.

Eine bekannte Edge-Plattform wird unter dem Namen AWS Greengrass von Amazon Web Services (AWS) zur Verfügung gestellt. Mit dieser Software kann lokal Datenverarbeitung, Synchronisierung und Inferenz auf Basis von Maschinenlernen für verbundene Geräte durchgeführt werden, auch ohne Verbindung zum Internet. Die Geräte sind dabei aber in der Regel vertikal mit der Cloud-Plattform verbunden, und kommunizieren nicht oder arbeiten nicht zusammen mit anderen Geräten des lokalen Netzwerks, es erfolgt also in der Regel keine sogenannte peer-to-peer-Kommunikation.

Dokument XP058426314 ("Microservice Patterns for the Life Cycle of Industrial Edge Software") offenbart eine Industrial Edge Software in einem Industrieanlagennetzwerk, bestehend aus Edge- und Cloud-Geräten. Ein Gateway entscheidet mit Hilfe einer Service Registry, ob Daten aus der Cloud oder einem Edge Device abgerufen werden.

DARSTELLUNG DER ERFINDUNG

Es ist somit eine Aufgabe der Erfindung, ein Verfahren anzugeben, mit welchem Daten der einzelnen Geräte des lokalen Netzwerks, also innerhalb der Edge, untereinander ausgetauscht werden können, sodass daraus bereits in der Edge Analysen durchgeführt oder Schlussfolgerungen gezogen werden können.

Diese Aufgabe wird durch ein Verfahren nach Anspruch 1 gelöst. Anspruch 1 betrifft ein Verfahren zur Zusammenarbeit von mehreren Geräten eines lokalen Netzwerks,

wobei Daten eines Geräts direkt einem anderen Gerät des lokalen Netzwerks übermittelt werden,
wobei die Geräte jeweils über einen Rechner mit Software-Anwendungen zur Verarbeitung der Daten des Geräts verfügen, wobei das lokale Netzwerk mit einem Cloud-Netzwerk in Verbindung steht, welches Back-End-Dienste für die Verarbeitung der Daten aus dem lokalen Netzwerk ausführt. Dabei ist vorgesehen, dass zumindest ein erstes Gerät des lokalen Netzwerks über eine Software-Anwendung verfügt, mittels welcher dieses Gerät bestimmt, welches zweite Gerät des lokalen Netzwerks benötigte Daten zur Verfügung stellen kann, ohne bei dieser Bestimmung Software-Anwendungen im Cloud-Netzwerk zu verwenden , wobei bei der Bestimmung des zweiten Geräts ein Maß der Übereinstimmung zwischen bestimmten Maßzahlen von erstem und zweitem Gerät verwendet wird.

Das erfindungsgemäße Verfahren wird dann angewendet, wenn die von einem Gerät gesammelten Daten nicht ausreichend sind, um Schlussfolgerungen daraus zu ziehen.

Ein erstes Beispiel betrifft ein lokales Netzwerk einer Produktionsanlage. Ein erstes Gerät des lokalen Netzwerks ist eine Schneidemaschine, ein zweites Gerät ist eine Bearbeitungsmaschine stromabwärts der Schneidemaschine. Das erste Gerät verfügt über eine Software-Anwendung zur Optimierung der Schneidemaschine und sollte zeitnah Informationen von der Software-Anwendung des zweiten Geräts holen, welche den Status der Bearbeitungsmaschine aufzeichnet. Die Software-Anwendung des ersten Geräts könnte die Information aus der Cloud-Plattform beschaffen, wo sie von der Software-Anwendung des zweiten Geräts abgelegt worden ist. Da eine Optimierung aber zeitkritisch ist, wäre es riskant, sich nur auf die Cloud-Plattform und eine entsprechend schnelle Datenverbindung dorthin zu verlassen. Die Optimierung bzw. eine Entscheidung auf Basis dieser Optimierung sollten im lokalen Netzwerk getroffen werden, unterstützt beispielsweise durch cloud-basiertes Maschinenlernen.

Ein zweites Beispiel betrifft die Ölförderung, wo mit Hilfe von mehreren elektrisch betriebenen Tauchpumpen Öl von einem unterirdischen Reservoir an die Oberfläche gepumpt wird. Die analytische Aufgabe kann darin bestehen, die einzelnen Tauchpumpen hinsichtlich Abnützung zu überwachen, sodass eine bestimmte Tauchpumpe nötigenfalls ausgewählt und rechtzeitig gewartet werden kann. Leider ist in der Regel nicht offensichtlich, ob bei einem bestimmten Symptom (z.B. Druckspitzen am Auslass der Tauchpumpe) bei einer bestimmten Tauchpumpe eine Abnützung vorliegt, oder ein anderer Grund, etwa aus dem Reservoir eingesaugtes Gas.

Dieses Problem kann als sogenanntes Dynamic Belief Network (DBN), das auch als Bayes'sches Netz bezeichnet wird, modelliert werden, wie dies von Al-Kinani et al. in "Adaptive Advisory Systems for Oil and Gas Operations" gezeigt wird, siehe hierzu die folgende Tabelle. Das Problem kann nicht vollkommen gelöst werden, wenn man nur ein Gerät des lokalen Netzwerks zur Überwachung mehrerer Tauchpumpen, also nur eine Tauchpumpe, betrachtet.

| Pumpenalter hoch | | |
|---|---|---|
| Pumpenalter | eingesaugtes Gas | mechanischer Schaden |
| Hoch | 50 | 80 |
| Niedrig | 50 | 20 |
| Gasgehalt des Reservoirs hoch | | |
| Gasgehalt | eingesaugtes Gas | mechanischer Schaden |
| Hoch | 90 | 50 |
| Niedrig | 10 | 50 |
| Druckspitzen am Auslass: ja | | |
| Druckspitzen | eingesaugtes Gas | mechanischer Schaden |
| Ja | 90 | 60 |
| Nein | 10 | 40 |

Aus der Tabelle folgt, dass das Problem zu 63% auf eingesaugtem Gas beruht, und zu 37% auf einem mechanischen Schaden.

Bei beiden Beispielen ist die bisherige Struktur des lokalen Netzwerks nicht ausreichend, damit eine Kommunikation und Zusammenarbeit zwischen den Geräten stattfindet.

Beim erfindungsgemäßen Verfahren wird davon ausgegangen, dass jedes Gerät einem Knoten N im lokalen Netzwerk entspricht, und jedes Gerät/jeder Knoten mit anderen Geräten/Knoten des gleichen lokalen Netzwerks kommunizieren kann, unter Beibehaltung der Topologie des lokalen Netzwerks, und dass es eine Routing Tabelle im lokalen Netzwerk gibt, woraus jedes Gerät entnehmen kann, wie es zumindest ein anderes Geräte im lokalen Netzwerk erreichen kann. Gerät und Knoten werden hier synonym verwendet, wobei Gerät auf das physische Gerät abstellt und Knoten auf dessen Funktion im Kommunikationsnetzwerk, die durch den Rechner mit Software-Anwendungen zur Verarbeitung der Daten des Geräts realisiert wird.

Eine Ausführungsform der Erfindung sieht vor, dass erstes und zweites Gerät über ein semantisches Kommunikationsprotokoll miteinander kommunizieren. Dieses umfasst semantische Protokolle und Datentypen, die dem Fachmann an sich bekannt sind. Ein solches standardisidertes Protokoll ist z.B. die OPC Unified Architecture, kurz OPC UA, ein industrielles M2M-Kommunikationsprotokoll.

Eine Ausführungsform der Erfindung sieht vor, dass bei der Bestimmung des zweiten Geräts ein Maß der Übereinstimmung zwischen bestimmten Maßzahlen von erstem und zweitem Gerät verwendet wird.

Eine Ausführungsform der Erfindung sieht vor, dass bei der Bestimmung des zweiten Geräts ein Maß des Vertrauens zwischen erstem und zweitem Gerät verwendet wird, basierend auf bestimmten Maßzahlen des zweiten Geräts relativ zum ersten Gerät.

In beiden Fällen können die gleichen Maßzahlen verwendet werden. Somit sieht eine Ausführungsform der Erfindung vor, dass eine oder mehrere der folgenden Maßzahlen verwendet werden: Antwortzeit, Verlässlichkeit, Qualität der Information, Kosten für die Kommunikation (zwischen erstem und zweitem Gerät).

Eine Ausführungsform der Erfindung sieht vor, dass das Maß des Vertrauens zwischen erstem und zweitem Gerät mit Hilfe eines Bayes-Klassifikators, insbesondere eines naiven Bayes-Klassifikators, bestimmt wird.

Es kann vorgesehen sein, dass das Maß des Vertrauens aus dem Verhältnis von zufriedenstellenden Interaktionen zwischen erstem und zweitem Gerät zu allen Interaktionen zwischen erstem und zweitem Gerät berechnet wird. Dabei kann wiederum vorgesehen sein, dass ein Grad der Zufriedenstellung als gewichtete Summe der Zufriedenstellung aller Maßzahlen bestimmt wird.

Beispielsweise kann vorgesehen sein, dass für jedes Paar aus erstem und zweitem Gerät zumindest ein Schwellwert für den Grad an Zufriedenstellung bestimmt wird, indem das erste Gerät eine Vorhersage aus Daten des zweiten Geräts berechnet, für diese Vorhersage ein Feedback aus dem Cloud-Netzwerk erhält und daraus mittels Maschinenlernen einen Schwellwert berechnet. Wenn genau ein Schwellwert bestimmt wird, dann gibt es nur zwei Zustände für die Zufriedenstellung: "zufriedenstellend" und "nicht zufriedenstellend". Wenn man mehrere Schwellwerte bestimmt, gibt es entsprechend mehr als zwei Zustände für die Zufriedenstellung. Dieser Schwellwert wird nur einmalig bestimmt, sodass nur hier, und nicht bei der wiederholten Suche nach einem passenden zweiten Gerät, Cloud-Netzwerk verwendet wird.

Unabhängig davon, wie das Maß des Vertrauens bestimmt wird, kann vorgesehen sein, dass das Maß des Vertrauens einer Alterung unterzogen wird, indem sich das Maß des Vertrauens aus einer gewichteten Summe von historischen Maßen zusammensetzt, wobei jüngere Maße höher gewichtet werden als ältere Maße.

Besonders einfach kann die Auswahl des zweiten Geräts erfolgen, wenn bei der Bestimmung des zweiten Geräts ein Repository des zweiten Geräts abgefragt wird, also ein Speicher, wo die interessierenden Daten geordnet abgelegt sind.

Um das Auffinden eines passenden zweiten Geräts zu erleichtern, kann vorgesehen sein, dass bei der Bestimmung des zweiten Geräts ein Bloom Filter verwendet wird.

Da das erfindungsgemäße Verfahren auf bzw. mit einem oder mehreren Rechnern (Computern) der einzelnen Geräte des lokalen Netzwerks ausgeführt wird, umfasst die Erfindung auch ein entsprechendes Computerprogrammprodukt, welches wiederum Befehle umfasst, die bei der Ausführung des Programms durch zumindest ein erstes Gerät und zumindest ein zweites Gerät des lokalen Netzwerks diese Geräte veranlassen, alle Schritte des erfindungsgemäßen Verfahrens auszuführen. Das Computerprogrammprodukt kann beispielsweise ein Datenträger sein, auf welchem ein entsprechendes Computerprogramm gespeichert ist, oder es kann ein Signal oder Datenstrom sein, der über eine Datenverbindung in den Prozessor eines Computers geladen werden kann.

Das Computerprogramm kann also folgende Schritte veranlassen bzw. selbst durchführen: dass zumindest ein erstes Gerät des lokalen Netzwerks bestimmt, welches zweite Gerät des lokalen Netzwerks benötigte Daten zur Verfügung stellen kann, ohne bei dieser Bestimmung Software-Anwendungen im Cloud-Netzwerk zu verwenden. Das lokale Netzwerk kann über mehrere erste Geräte verfügen, die also andere Geräte abfragen bzw. von diesen Berechnungen durchführen lassen und die Daten auslesen. Das lokale Netzwerk kann über mehrere zweite Geräte verfügen, die also Berechnungen für andere (erste) Geräte ausführen und an diese Daten versenden. Schließlich können mehrere oder sogar alle Geräte des lokalen Netzwerks sowohl als erstes als auch als zweites Gerät ausgebildet sein.

Mit dem erfindungsgemäßen Verfahren können die Geräte des lokalen Netzwerks sich untereinander verbinden und viel schneller Daten analysieren und Gründe für Zustände der Geräte oder deren Umgebung bestimmen, als dies unter Einbindung des Cloud-Netzwerks möglich wäre.

KURZE BESCHREIBUNG DER FIGUREN

Zur weiteren Erläuterung der Erfindung wird im nachfolgenden Teil der Beschreibung auf die Figuren Bezug genommen, aus denen weitere vorteilhafte Einzelheiten und mögliche Einsatzgebiete der Erfindung zu entnehmen sind. Dabei zeigt

Fig. 1    eine Modell für ein lokales Netzwerk, das mit einem Cloud-Netzwerk verbunden ist,
Fig. 2    ein Feedback-Modell,
Fig. 3    eine Tabelle mit möglichen Zuständen.

WEGE ZUR AUSFÜHRUNG DER ERFINDUNG

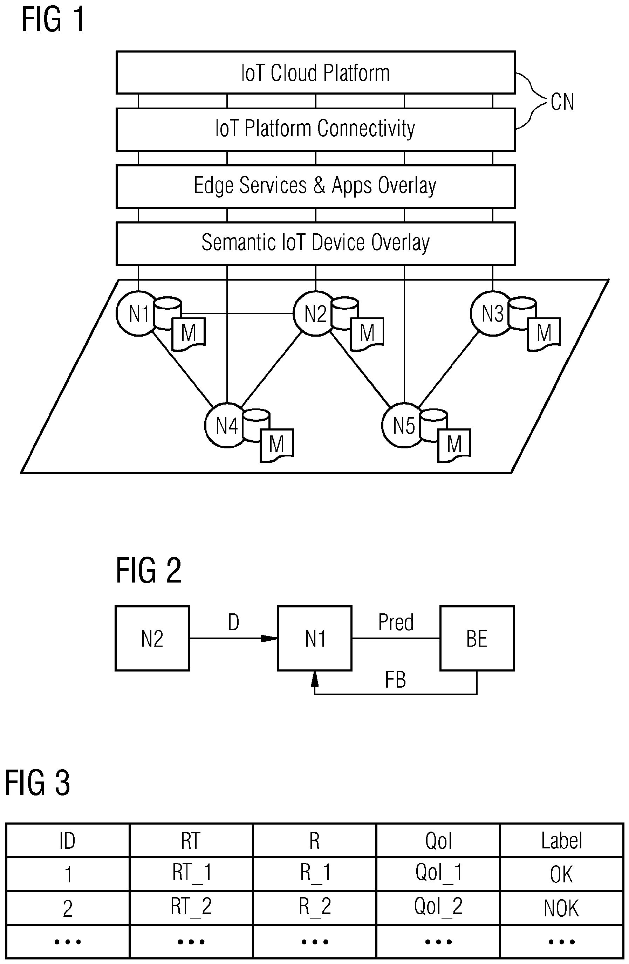

Fig. 1 zeigt ein Modell eines lokalen Netzwerks und dessen Verbindung mit einen Cloud-Netzwerk. Die unterste Ebene stellt ein lokales Netzwerk EN, eine Edge, dar, die aus mehreren physischen Geräten besteht, die auch als Knoten N1, N2, N3, N4, N5 bezeichnet werden. Die Geräte können Daten aus der Umgebung sammeln, etwa aus einer Produktionsanlage, oder von Industrieanlagen zur Weiterverarbeitung von Produkten, z.B. von Erdöl oder Erdgas, oder aus einem intelligenten Stromnetz (Smart Grid). Die Knoten N1-N5 haben in der Regel (begrenzte) Speicherkapazitäten, z.B. zum Sammeln historischer Daten, und die Fähigkeit, lokal Folgerungen zu ziehen, z.B. Daten mit Hilfe von Maschinenlernen zu klassifizieren. Unter Maschinenlernen fallen z.B. Support Vector Machines (SVM), Random Forests (RF), neuronale Netzwerke (NN), neuronale Netzwerke für Deep Learning (engl. Deep NN, DNN). In Fig. 1 ist die Eigenschaft zum Maschinenlernen mit M bezeichnet.

Jedes Gerät N1-N5 kann mit einem oder mehreren anderen Geräten N1-N5 kommunizieren, was durch Verbindungslinien zwischen den Geräten dargestellt ist. Damit die Geräte N1-N5 Daten in Wege einer peer-to-peer Zusammenarbeit austauschen können, müssen für die Geräte N1-N5 entsprechende semantische Protokolle und Datentypen zur Verfügung gestellt werden, die dem Fachmann an sich bekannt sind. Ein solches standardisidertes Protokoll ist z.B. die OPC Unified Architecture, kurz OPC UA, ein industrielles M2M-Kommunikationsprotokoll. Dieses Protokoll hat die Fähigkeit, Maschinendaten (Regelgrößen, Messwerte, Parameter usw.) nicht nur zu transportieren, sondern auch maschinenlesbar semantisch zu beschreiben. Diese Ebene wird in Fig. 1 als Semantic IoT Device Overlay bezeichnet.

Das Kernstück der Architektur ist die Ebene Edge Services and Apps Overlay. Jedes Gerät N1-N5 hat die Fähigkeit eine Anzahl von Anwendungen (Services) für andere Geräte N1-N5 anzubieten sowie andere Anwendungen (Apps), um bestimmte Aufgaben zu erledigen. Diese Ebene unterstützt das Auffinden von anderen Geräten N1-N5 und deren Fähigkeit, bestimmte Aufgaben zu erledigen. Eine Aufgabe kann sein, Schlussfolgerungen (engl. inferences) mittels eines Modells zum Maschinenlernen zu ziehen, wobei das Modell für ein bestimmtes Gerät des lokalen Netzwerks trainiert wurde, z.B. eine Tauchpumpe oder eine Maschine in einer industriellen Anlage.

Die beiden anderen Ebenen, IoT Platform Connectivity und IoT Cloud Platform, sind dem Cloud-Netzwerk zugeordnet und sind an sich standardmäßig ausgeführt, erstere dient der Übermittlung von Daten und Ereignissen an die Back-End Anwendungen der zweiten Ebene IoT Cloud Platform (in Folgenden Cloud Plattform), wo die Daten und Ereignisse gesammelt und archiviert werden und wo diese mit Anwendungen weiterverarbeitet werden.

Erfindungsgemäß wird nun mit der Architektur des lokalen Netzwerks EN, wo die Aufgaben auf die einzelnen Geräte N1-N5 verteilt werden, das von Al-Kinani et al. beschriebene Problem in dezentraler Weise gelöst, ohne die dabei verwendeten Daten im Cloud-Netzwerk CN zentral zu sammeln und zu archivieren. Die Frage, ob z.B. eine Anomalie bei einer Tauchpumpe auf einen mechanischen Defekt oder auf Gas im Reservoir zurückzuführen ist, kann durch Abfrage anderer Tauchpumpen beantwortet werden, wenn diese ähnliche Anomalien erfahren. Angenommen Gas im Reservoir ist der Grund für die Anomalie, dann können verschiedene Aktionen gesetzt werden, wie Erhöhung der Drehzahl der Tauchpumpe, Reduktion des Durchflusses, oder Erhöhung des Drucks im Reservoir. Die Erhöhung der Drehzahl der Tauchpumpe ist eine einfach durchzuführende Maßnahme.

Die Entscheidung, welche Aktion gesetzt wird, kann lokal im lokalen Netzwerk EN getroffen werden, oder in der Cloud Plattform des Cloud-Netzwerks CN. Entscheidungen, die über den Bereich der Tauchpumpen hinausgehen, etwa das Reservoir betreffen, werden in der Cloud Plattform getroffen, auf Basis von Daten und Beweisen, die durch das lokale Netzwerk gesammelt worden sind.

Um, ausgehend von einem ersten Gerät/Knoten, die Geräte/Knoten des lokalen Netzwerks auszuwählen, die angesprochen werden sollen, bieten sich folgende Möglichkeiten an: Es kann ein Grad der Übereinstimmung bestimmt werden, ob ein anderer (zweiter) Knoten wertvolle Information über den Grund eines Problems liefern kann. Bezogen auf das Beispiel mit den Saugpumpen heißt das, ob eine andere Saugpumpe Informationen liefern kann, ob es ein mechanisches Problem einer Saugpumpe oder ein Problem in Reservoir ist, das mehrere Saugpumpen betrifft.

Eine Möglichkeit zur Auswahl des anderen Geräts/Knotens besteht in einer vertrauensbasierten Auswahl eines anderen Geräts/Knotens. Vertrauen wird dabei definiert als der Glaube an die Attribute des anderen Geräts/Knotens, wobei die Attribute z.B. Verlässlichkeit (engl. reliability), Ehrlichkeit (engl. honesty) und/oder Kompetenz (engl. competence) umfassen können. Diese Attribute können in einem Set aus Maßzahlen (engl. metrics) ausgedrückt werden, wobei die Maßzahlen z.B. die Antwortzeit (engl. response time) des anderen Geräts/Knotens und die Qualität der Information (engl. quality of information, QoI) umfassen können. Zusätzlich können auch die Kosten für die Kommunikation (engl. Communication Cost, CC) im Auswahlprozess mitberücksichtigt werden.

Man kann dabei für das lokale Netzwerk EN und das Cloud-Netzwerk CN voraussetzen, dass alle Geräte/Knoten N1-N5 des lokalen Netzwerks und deren grundlegene Netzwerkkonfiguration sowie grundlegene Merkmale im Cloud-Netzwerk hinterlegt sind, etwa in der Cloud-Plattform mit Back-End-Diensten, dort in der Regel in einer Anwendung, die als Asset Management Service bezeichnet wird. Im Asset Management Service kann weiters die statische Topologie des lokalen Netzwerks EN abgelegt sein, z.B. ein Modell der Produktionseinrichtung, oder ein Modell der räumlichen Anordnung der Tauchpumpen. Im Asset Management Service können auch Merkmale der einzelnen Geräte/Knoten hingerlegt sein, die eine Gruppierung von Geräte/Knoten mit ähnlichen Eigenschaften ermöglicht. Unter statisch versteht man hier, dass sich die Topologie und gegebenenfalls die Merkmale der einzelnen Geräte/Knoten nur sehr langsam ändern. Jedes Gerät bzw. jeder Knoten N1-N5 erhält periodisch, z.B. täglich, vom Asset Management Service ein Update von dieser statischen Topologie und gegebenenfalls von den Merkmalen.

Jedes Gerät bzw. jeder Knoten N1-N5 wendet ein Muster an, das als Client Side Service Discovery bezeichnet wird und etwa auf https://microservices.io/patterns/client-side-discovery.html beschrieben ist. Diese Anwendungen werden als Microservices bezeichnet. Es wird also ein anderes Gerät/ein anderer Knoten des lokalen Netzwerks EN abgefragt, ob es über eine passende Anwendung verfügt, und nicht eine Suchfunktion verwendet, die im Cloud-Netzwerk CN angesiedelt ist. Genauer wird ein sogenanntes Repository des anderen Geräts/Knotens abgefragt, also ein verwaltetes Verzeichnis zur Speicherung und Beschreibung des Geräts/Knotens. Die Anwendung Client Side Service Discovery verwendet also Daten, die im Repository des lokalen Geräts/Knotens abgespeichert sind, wodurch diese Anwendung auch ausgeführt werden kann, wenn gerade keine oder nur eine sehr langsame Verbindung mit dem Cloud-Netzwerk CN besteht.

Die entsprechenden Funktionen der Anwendung Client Side Service Discovery heißen getGroupMembers() und getMatches(). Ein möglicher kommentierter Programmcode ist im Folgenden angeführt:

```
function retrieveNode(Query q)
(
   // this will be the node selected for collaboration.
   Node selectedPeer = null;

   // get nodes by membership, e.g. all IoT nodes in the same plant
   // or all IoT nodes in the same geographic region.
   List<Node> nodeCollection = getGroupMembers();

   // retrieve those nodes matching query q.
   Set<Node> matchingNodes = getMatches(nodeCollection, q);

   // multiple nodes in matchingNodes can provide relevant
   // information, Either we select among the nodes we have visited
   // in the past or try a random new node (exploration vs.
   // exploitation).
   // the preconfigured "exploration rate" is the threshold. visitedFilter
   // is a bloom index holding information on
   // visited IoT nodes we have collaborated with in the past.
   if (random.nextDouble() < 0.05 || isEmpty(visitedFilter))
   (
      selectedPeer = getRandomNewNode(matchingNodes, visitedFilter);
   )
   else
   {
      // now perform the ranking process using trust and
      // communication cost metrics.
      List<Node> rankedNodes = rankNodes(matchingNodes);
      // the node with the best score in terms of high trust and
```

```
    // the low communication cost (basically the number of hops)
    // can be found at the first position of the list.

      selectedPeer = rankedNodes.getFirst();
    }
    // add to bloom index of visited nodes.
    visitedFilter.add(selectedPeer);

    return selectedPeer;
  }
```

Um das Auffinden von geeigneten Anwendungen auf anderen Geräte/Knoten N1-N5 zu unterstützen, können die Geräte/Knoten des lokalen Netzwerks in Gruppen eingeteilt werden und anschließend sogenannte Bloom Filter verwendet werden. Ein Bloom-Filter ist eine probabilistische Datenstruktur, mit deren Hilfe sehr schnell festgestellt werden kann, welche Daten in einem Datenstrom schon einmal vorgekommen sind und welche erstmals auftreten. Hierzu werden, in der Regel mit einer geeigneten Zahl von Hash-Funktionen, ein oder mehrere Schlüsselwerte des gelesenen Datensatzes hinterlassen, in der Regel in einer einzeiligen Hashtabelle. Im Gegensatz zu vergleichbaren Algorithmen brauchen Bloom-Filter nur sehr wenig Speicherplatz, sodass sie auch von den lokalen Geräten/Knoten N1-N5 angewendet werden können. Schlüsselwerte, die einmal erfasst wurden, verbleiben dort. Weiterhin sind falsch positive Ergebnisse möglich, d.h. was der Bloom Filter akzeptiert, war mit hoher Wahrscheinlichkeit in den Schlüsselwerten enthalten; hingegen war definitiv nicht enthalten, was er abweist. Das Ergebnis eines Bloom-Filters eines Datensatzes bzw. bezüglich des entsprechenden anderen Geräts/Knotens lautet also "wahrscheinlich in der Gruppe" oder "sicher nicht in dieser Gruppe".

Ein möglicher kommentierter Programmcode ist im Folgenden angeführt:

```
// initialize relevant data structures.
Map<BloomFilter, Set<Node>> index - createMapping();

function createIndex()
{
 List<Node> nodeCollection = getGroupMember();

 // perform clustering using unsupervised machine learning based
 // on the services offered by the nodes and asset traits.
 // e.g., using k-means or similar
 Set<Set<Node>> nodeClusters = cluster(nodeCollection);

 // length and number of hash functions will be selected to
 // provide the given false positive probability.
 double fpProb = 0.1;
 int expectedSize = 100; // number of IoT nodes in cluster.

 foreach (Cluster c : nodeClusters)
 (
   BloomFilter bf = new BloomFilter(fpProb, expectedSize);
   foreach (Feature feature : c.getFeatures()
     bf.add(feature);
   index.put(bf, c);
 }
}
// function to get nodes given query q.
function getMatches(List<Node> nodes, q)
{
 foreach (BloomFilter bf : index)
 {
   // iterate over provided query terms (services, asset traits).
   foreach (String term : q)
   (
     if (lbf.contains(term))
       continue; // filter not matching. Continue to next filter.
   }
   return index.get(bf);
```

```
  }
  return emptySet();
}
```

Um nun das Vertrauen in das andere Gerät (also zwischen einem erstem und einem zweitem Gerät) zu modellieren, werden hier die Attribute Antwortzeit, Verlässlichkeit und Kompetenz ausgewählt, um mittels eines Bayes-Klassifikators verarbeitet zu werden. Ein Bayes-Klassifikator ordnet jedes Objekt der Klasse zu, zu der es mit der größten Wahrscheinlichkeit gehört. Genau genommen handelt es sich um eine mathematische Funktion, die jedem Punkt eines Merkmalsraums eine Klasse zuordnet. Das Trainieren und Updaten des Bayes-Klassifikators erfolgt auf dem Gerät N1-N5 des lokalen Netzwerks, und nicht im Cloud-Neztwerk CN. Bayes-Klassifikatoren skalieren linear mit der Anzahl der Datenpunkte und Anzahl der vorhergesagten Größen, was ebenfalls die Ausführung auf dem lokalen Gerät erleichtert.

Es wird hier z.B. ein naiver Bayes-Klassifikator verwendet, der bei guter Erkennungsrate schnell berechenbar ist. Mittels des naiven Bayes-Klassifikators ist es möglich, die Zugehörigkeit eines Objektes (Klassenattribut) zu einer Klasse zu bestimmen. Man könnte einen naiven Bayes-Klassifikator auch als sternförmiges Bayessches Netz betrachten. Die naive Grundannahme ist dabei, dass jedes Attribut nur vom Klassenattribut abhängt. Obwohl dies in der Realität selten zutrifft, erzielen naive Bayes-Klassifikatoren bei praktischen Anwendungen häufig gute Ergebnisse, solange die Attribute nicht zu stark korreliert sind.

Der naive Bayes-Klassifikator besteht aus einem Basisknoten und mehreren, von diesem ausgehenden Ästen. Vorerst wird nur das Vertrauen modelliert, später können noch andere Aspekte in den Bayes-Klassifikator eingebaut werden. Die drei hier verwendeten Maßzahlen sind Antwortzeit, Verlässlichkeit und Qualität der Information. Die Antwortzeit ist die Differenz zwischen der Anfrage für eine Information und dem Erhalt der Antwort. Eine zeitnahe Antwort ist wichtig für die Datenüberttragung im lokalen Netzwerk EN. Die Verlässlichkeit eines Geräts N1-N5 bezeichnet dessen Fähigkeit, unter vorgegebenen Bedingungen für eine vorgegebene Zeit zu funktionieren. Es ist wichtig, dass die von den einzelnen Geräten/Knoten zur Verfügung gestellten Dienste und Anwendungen verlässlich funktionieren. Mit der Qualität der Information meint man deren Aktualität, Genauigkeit,

Vollständigkeit und Reproduzierbarkeit. Eine gute Qualität ist Voraussetzung, damit die Information für Schlussfolgerungen genützt werden kann.

Jedes Gerät des lokalen Netzwerks (also jeder Knoten des lokalen Netzwerks) N1-N5 entwickelt einen naiven Bayes-Klassifikator für jedes andere Gerät N1-N5 des lokalen Netzwerks (also jeden anderen Knoten des lokalen Netzwerks) EN, mit dem es in der Vergangenheit kommuniziert hat. Jeder Bayes-Klassifikator hat einen Basisknoten, der zwei Werte aufweisen kann, zufriedenstellend oder nicht zufriedenstellend. P(T=1) repräsentiert den Wert des gesamten Vertrauens in das andere Gerät, dass dieses wertvolle Information aus der Umgebung liefert, z.B. aus dem Öl- oder Gasreservoir. Es wird dabei das Verhältnis der zufriedenstellenden Interaktionen zu allen Interaktionen bewertet. P(T=0) repräsentiert den Wert der nicht zufriedenstellenden Interaktionen. Jedem Ast des naiven Bayes-Klassifikators ist eine Tabelle mit bedingten Wahrscheinlichkeiten zugeordnet. Folgende Tabelle gibt als Beispiel diese bedingten Wahrscheinlichkeiten für die Qualität der Information QoI an. Die bedingten Wahrscheinlichkeiten für Antwortzeit RT und Verlässlichkeit R werden ebenfalls so festgelegt.

Der Ast für die Qualität der Information QoI repräsentiert ein Set von verschiedenen Anwendungen (Apps), für das Beispiel der Tauchpumpen wird angenommen, dass drei Werte bzw. Anwendungen umfasst sind, die Anwendung für den Druck im Pumpenkopf (Head Pressure Service, PS), die Anwendung für die Produktionsrate (Production Rate Service, PR) und die Anwendung für die Zustandsparameter (Asset Parameter Service, AP). Jede Spalte betrifft eine Einschränkung, welche jeweils einem Wert des Basisknotens des Bayes-Klassifikators entspricht. Die Summe der Werte jeder Spalte ist gleich eins.

| App | T = 1 | T = 0 |
|-----|-------|-------|
| PS | P(Qo="PS" \|T=1) | P(QoI="PS" \|T=0) |
| PR | P(QoI="PR" \| T=1) | P(QoI="PR" \| T=0) |
| AP | P(QoI="AP" \| T=1) | P(QoI="AP" \| T=0) |

Ein möglicher kommentierter Programmcode zur Berechnung des Vertrauens eines Geräts/Knotens des lokalen Netzwerks ist im Folgenden angeführt:

```
// essentially compute the following:
// P(T=1|RT, R, Qol) = P (T-1) *P (RT |T=1) *P (RT |T=1) *P (QoI |T=1)
// for simplicity, we average over all apps (e.g., PS, PR, AP).
```

```
// returns a trust value for IoT node n between 0 and 1.
// category is T=1, can be more detailed like low, medium or high.
function computeTrust (Node n, List<Metric> metrics, int category)
{
  // the overall degree of nodes' satisfaction s with
  // an interaction is computed as the following:
  // s = w1*s(RT) + w2*s(R) + w3*e(QoT), where w1 + w2 + w3 = 1.

  // Each node has a satisfaction threshold s_t. If s < s_t,
  // the interaction is unsatisfying; otherwise, it is satisfying.
  var numSatisfyingInteractions - getCount (n, category);
  var numTotalInteractions = getCountTatal (n) ;
  var prior = numSatisfyingInteractions / numTotalInteractions;

  var metricProduct = 0.0;
  foreach (Metric m : metrics)
  {
    // satisfying interactions with respect to m divided by
    // all interactions with respect to m.
    // probabilities can be computed w.r.t certain apps.
    var metricProbability = getProbability (m, category};
    // default value is 1 / numMetrics.
    var metricWeight = getWeight(m);

    metricProduct *= (metricWeight * metricProbability);
  }
  // the computed trust value for n.
  return (prior * metricProduct);
}
```

Vorzugsweise werden die Werte für das Vertrauen einer Alterung unterzogen. Wie bei der Erinnerung eines Menschen können vom Gerät/Knoten N1-N5 bestimmte Daten eines anderen Geräts/Knotens N1-N5 vergessen werden. Wenn z.B. für ein Gerät/einen Knoten des lokalen Netzwerks die Hardware eines Sensors verbessert wird, kann dieser an die anderen Geräte/Knoten genauere Werte liefern, was die Qualität der Information verbessert. Auch die physische Umgebung des lokalen Netzwerks EN kann sich ändern, z.B. das Ölreservoir im Fall der Tauchpumpen. Insofern kann sich die Fähigkeit eines Geräts/Knotens, tragfähige Daten zu liefern, mit der Zeit ändern. Ältere historische Daten sind dann überholt und sollten vergessen werden.

Das Altern kann für alle Maßzahlen gleich erfolgen oder für jede Maßzahl individuell vorgegeben werden. Das Altern erfolgt dadurch, dass weiter zurückliegenden Beobachtungen eine geringere Bedeutung zugemessen wird als kürzer zurückliegenden Beobachtungen. Der Wert des gesamten Vertrauens eines Geräts/Knotens in ein bestimmtes anderes Gerät/Knoten P(T=1) berechnet sich dann z.B. wie folgt:

P(T=1) = (Anzahl der zufriedenstellenden Interaktionen / Anzahl aller Interaktionen) [zum Zeitpunkt t] + + (1-$\alpha$)*(Anzahl der zufriedenstellenden Interaktionen / Anzahl aller Interaktionen) [zum Zeitpunkt t-1] + + (1-$\alpha$)$^2$*(Anzahl der zufriedenstellenden Interaktionen / Anzahl aller Interaktionen) [zum Zeitpunkt t-2]

Der Alterungsfaktor $\alpha$ liegt zwischen 0 und 1, er legt die Gewichtung von jüngeren gegenüber älteren Interaktionen fest.

Es ist notwendig, systematisch zumindest einen Schwellwert für die Zufriedenstellung s mit einer Interaktion und damit eine Gewichtung der Maßzahlen einzuführen. Damit dies möglichst einfach erfolgen kann, hat jedes Gerät/jeder Knoten N1-N5 des lokalen Netzwerks EN für eine bestimmte Interaktion einen gemeinsamen Grad s der Zufriedenstellung über alle Maßzahlen, der sich wie folgt berechnet:

$$s = w1*s(RT) + w2*s(R) + w3*s(QoI),$$

wobei für die Gewichtsfaktoren gilt:

$$w1 + w2 + w3 = 1$$

Jedes Gerät/jeder Knoten hat eine Zufriedenstellungsschwelle s_t. Jede Interaktion mit s kleiner s_t ist nicht zufriedenstellend, jede Interaktion mit s größer oder gleich s_t ist zufriedenstellend. Um nun die Schwelle s_t und die Gewichtsfaktoren zu berechnen, wird vorgeschlagen, eine einfache Rückkoppelungsschleife zu verwenden, siehe Fig. 2.

Das Gerät/der Knoten N1 liefert Vorhersagedaten Pred an eine Anwendung BE im Back-End des Cloud-Netzwerks, also in der IoT Cloud Platform in Fig. 1. Andere Geräte/Knoten, wie Gerät/Knoten N2, liefern ebenfalls Daten D an das Gerät N1. Die Anwendung BE sendet an das Gerät N1 ein Feedback FB zurück. Das Feedback kann z.B. sein, wie brauchbar die gelieferten Vorhersagedaten Pred waren, z.B. dass diese in einem Alarm resultierten, der als echter Alarm zu werten ist. Diese Art von Feedback kann berücksichtigt werden, wenn die Zufriedenstellungsschwelle s_t und die Gewichtsfaktoren w1, w2, w3 bestimmt werden.

Geht man als Beispiel von einer einfachen Datenstruktur wie in Fig. 3 aus, so ist für jedes Gerät/jeden Knoten eine Identifikation ID vorgegeben: 1 bezeichnet das Gerät/den Knoten N1, 2 bezeichnet N2, und so weiter. Die Spalten RT, R und QoI beziehen sich auf die jeweiligen Maßzahlen, die Zeilen bezeichnen aktuelle Werte und die letzte Spalte "Label" bezeichnet das erhaltene Feedback FB der Anwendung BE im Back-End des Cloud-Netzwerks: OK heißt, die vom Gerät/Knoten N1, N2, ... gesendeten Vorhersagedaten Pred waren brauchbar, und NOK, die vom Gerät/Knoten N1, N2, ... gesendeten Vorhersagedaten Pred waren nicht brauchbar.

Basierend auf dieser Datenstruktur können passende Werte für die Zufriedenstellungsschwelle s_t gelernt werden. Wird die Zufriedenstellungsschwelle s_t zu tief angesetzt, wäre das Feedback meistens NOK. Wird die Zufriedenstellungsschwelle s_t zu hoch angesetzt, wäre das Feedback meistens OK, aber es wäre schwierig, ein anderes passendes Gerät zu finden, von welchem das eine Gerät Information erhält. Die Zufriedenstellungsschwelle s_t ist also immer ein Kompromiss zwischen Qualität und Anwendbarkeit der Anwendung.

Zur Bestimmung der Gewichtsfaktoren w1, w2, w3 wird ein Klassifikationsmodell trainiert, z.B. ein Random Forest Modell, um die Antwort in der Spalte "Label" vorherzusagen. Als Nebeneffekt erhält man eine sogenannte variable Wichtigkeit (engl. variable importance, VarImp). Diese stellt eine statistische Signifikanz jeder Variablen in den Daten in Bezug auf den Effekt für das generierte Modell dar. Das heißt, wenn die variable Wichtigkeit eines bestimmten Maßes, also z.B. der Antwortzeit RT, der Verlässlichkeit R oder der Qualität der Information QoI, hoch ist, dann bekommt dieses Maß einen höheren Gewichtsfaktor, um bessere Resultate beim Feedback (Spalte "Label" in Fig. 3) zu erhalten. Die Gewichtsfaktoren w1, w2, w3 werden also entsprechend den variablen Wichtigkeiten angepasst.

Bezugszeichenliste:

| | |
|---|---|
| BE | Anwendung im Back-End des Cloud-Netzwerks |
| CN | Cloud-Netzwerk |
| D | Daten |
| EN | lokales Netzwerk (Edge) |
| FB | Feedback |
| M | Maschinenlernen |
| N1-N5 | Gerät/Knoten des lokalen Netzwerks |
| Pred | Vorhersagedaten |

**Patentansprüche**

1. Verfahren zur Zusammenarbeit von mehreren Geräten (N1-N5) eines lokalen Netzwerks (EN),

wobei Daten (D) eines Geräts direkt einem anderen Gerät des lokalen Netzwerks übermittelt werden, wobei die Geräte jeweils über einen Rechner mit Software-Anwendungen zur Verarbeitung der Daten des Geräts verfügen, wobei das lokale Netzwerk (EN) mit einem Cloud-Netzwerk (CN) in Verbindung steht, welches Back-End-Dienste für die Verarbeitung der Daten aus dem lokalen Netzwerk ausführt, **wobei** zumindest ein erstes Gerät (N1-N5) des lokalen Netzwerks über eine Software-Anwendung verfügt, mittels welcher dieses Gerät (N1-N5) bestimmt, welches zweite Gerät des lokalen Netzwerks benötigte Daten zur Verfügung stellen kann, ohne bei dieser Bestimmung Software-Anwendungen im Cloud-Netzwerk (CN) zu verwenden, **dadurch gekennzeichnet, dass** bei der Bestimmung des zweiten Geräts (N1-N5) ein Maß der Übereinstimmung zwischen bestimmten Maßzahlen von erstem und zweitem Gerät verwendet wird.

2. Verfahren nach Anspruch 1, **dadurch gekennzeichnet, dass** erstes und zweites Gerät (N1-N5) über ein semantisches Kommunikationsprotokoll miteinander kommunizieren.

**3.** Verfahren nach einem der vorhergehenden Ansprüche, **dadurch gekennzeichnet, dass** bei der Bestimmung des zweiten Geräts (N1-N5) ein Maß des Vertrauens zwischen erstem und zweitem Gerät verwendet wird, basierend auf bestimmten Maßzahlen des zweiten Geräts relativ zum ersten Gerät.

**4.** Verfahren nach einem der vorhergehenden Ansprüche, **dadurch gekennzeichnet, dass** eine oder mehrere der folgenden Maßzahlen verwendet werden: Antwortzeit, Verlässlichkeit, Qualität der Information, Kosten für die Kommunikation.

**5.** Verfahren nach Anspruch 3 oder 4, **dadurch gekennzeichnet, dass** das Maß des Vertrauens zwischen erstem und zweitem Gerät (N1-N5) mit Hilfe eines Bayes-Klassifikators, insbesondere eines naiven Bayes-Klassifikators, bestimmt wird.

**6.** Verfahren nach einem der Ansprüche 3 bis 5, **dadurch gekennzeichnet, dass** das Maß des Vertrauens aus dem Verhältnis von zufriedenstellenden Interaktionen zwischen erstem und zweitem Gerät (N1-N5) zu allen Interaktionen zwischen erstem und zweitem Gerät (N1-N5) berechnet wird.

**7.** Verfahren nach Anspruch 6, **dadurch gekennzeichnet, dass** ein Grad der Zufriedenstellung als gewichtete Summe der Zufriedenstellung aller Maßzahlen bestimmt wird.

**8.** Verfahren nach Anspruch 7, **dadurch gekennzeichnet, dass** für jedes Paar aus erstem und zweitem Gerät (N1-N5) zumindest ein Schwellwert für den Grad an Zufriedenstellung bestimmt wird, indem das erste Gerät eine Vorhersage aus Daten des zweiten Geräts berechnet, für diese Vorhersage ein Feedback aus dem Cloud-Netzwerk (CN) erhält und daraus mittels Maschinenlernen einen Schwellwert berechnet.

**9.** Verfahren nach einem der Ansprüche 3 bis 8, **dadurch gekennzeichnet, dass** das Maß des Vertrauens einer Alterung unterzogen wird, indem sich das Maß des Vertrauens aus einer gewichteten Summe von historischen Maßen zusammensetzt, wobei jüngere Maße höher gewichtet werden als ältere Maße.

**10.** Verfahren nach einem der vorhergehenden Ansprüche, **dadurch gekennzeichnet, dass** bei der Bestimmung des zweiten Geräts (N1-N5) ein Repository des zweiten Geräts abgefragt wird.

**11.** Verfahren nach einem der vorhergehenden Ansprüche, **dadurch gekennzeichnet, dass** bei der Bestimmung des zweiten Geräts (N1-N5) ein Bloom Filter verwendet wird.

**12.** Computerprogrammprodukt, umfassend Befehle, die bei der Ausführung des Programms durch zumindest ein erstes Gerät (N1-N5) eines lokalen Netzwerks (EN) dieses Gerät veranlassen, alle Schritte des Verfahrens nach einem der Ansprüche 1 bis 11 auszuführen.


**Claims**

**1.** Method for the collaboration of a plurality of devices (N1-N5) in a local network (EN),

wherein data (D) of one device is directly transmitted to another device in the local network,
wherein the devices each possess a computer with software applications for processing the data of the device,
wherein the local network (EN) is connected to a Cloud network (CN), which executes backend services for the processing of the data from the local network, **wherein** at least one first device (N1-N5) in the local network possesses a software application, by means of which this device (N1-N5) determines which second device in the local network is able to provide necessary data, without using software applications in the Cloud network (CN) for this determination, **characterised in that,** when determining the second device (N1-N5), a measure of conformity between particular metrics of the first and second device is used.

**2.** Method according to claim 1, **characterised in that** the first and second device (N1-N5) communicate with one another via a semantic communication protocol.

**3.** Method according to one of the preceding claims, **characterised in that,** when determining the second device (N1-N5), a measure of trust between the first and second device is used, based on particular metrics of the second device in relation to the first device.

**4.** Method according to one of the preceding claims, **characterised in that** one or more of the following metrics are used: response time, reliability, quality of information, communication cost.

**5.** Method according to claim 3 or 4, **characterised in that** the measure of trust between the first and second device (N1-N5) is determined with the aid of a Bayes classifier, in particular a naive Bayes classifier.

**6.** Method according to one of claims 3 to 5, **characterised in that** the measure of trust is calculated from the ratio of satisfactory interactions between the first and second device (N1-N5) to all interactions between the first and second device (N1-N5).

**7.** Method according to claim 6, **characterised in that** a degree of satisfaction is determined as a weighted sum of the satisfaction of all metrics.

**8.** Method according to claim 7, **characterised in that** a threshold value for the degree of satisfaction is determined for each pair consisting of first and second device (N1-N5), **in that** the first device calculates a prediction from data of the second device, obtains feedback for this prediction from the Cloud network (CN) and calculates a threshold value therefrom by means of machine learning.

**9.** Method according to one of claims 3 to 8, **characterised in that** the measure of trust is subjected to an aging, **in that** the measure of trust is composed of a weighted sum of historical measures, wherein younger measures are weighted more highly than older measures.

**10.** Method according to one of the preceding claims, **characterised in that** a repository of the second device is queried when determining the second device (N1-N5).

**11.** Method according to one of the preceding claims, **characterised in that** a bloom filter is used when determining the second device (N1-N5).

**12.** Computer program product, comprising commands which, when the program is executed by at least one first device (N1-N5) in a local network (EN), prompt this device to execute all steps of the method according to one of claims 1 to 11.


**Revendications**

**1.** Procédé de collaboration de plusieurs appareils (N1 à N5) d'un réseau (EN) local,

dans lequel on transmet des données (D) d'un appareil directement à un autre appareil du réseau local,
dans lequel les appareils disposent chacun d'un ordinateur ayant des applications logicielles de traitement des données de l'appareil,
dans lequel le réseau (EN) local est en liaison avec un réseau (CN) de nuage, qui effectue des services de back-end pour le traitement des données du réseau local, dans lequel au moins un premier appareil (N1 à N5) du réseau local dispose d'une application logicielle, au moyen de laquelle cet appareil (N1 à N5) détermine le deuxième appareil du réseau local qui peut mettre à disposition des données nécessaires sans utiliser dans cette détermination des applications logicielles du réseau de nuage (CN),
**caractérisé en ce que**, dans la détermination du deuxième appareil (N1 à N5) on utilise une mesure de la coïncidence entre des nombres de mesure déterminés du premier et du deuxième appareil.

**2.** Procédé suivant la revendication 1, **caractérisé en ce que** le premier et le deuxième appareil (N1 à N5) communiquent entre eux par un protocole de communication sémantique.

**3.** Procédé suivant l'une des revendications précédentes, **caractérisé en ce que**, dans la détermination du deuxième appareil (N1 à N5), on utilise une mesure de la confiance entre un premier et un deuxième appareil reposant des nombres de mesure déterminés du deuxième appareil par rapport au premier appareil.

**4.** Procédé suivant l'une des revendications précédentes, **caractérisé en ce que** l'on utilise un ou plusieurs des nombres de mesure suivants : temps de réponse, fiabilité, qualité de l'information, coût de la communication.

**5.** Procédé suivant la revendication 3 ou 4, **caractérisé en ce que** l'on détermine la mesure de la confiance entre le premier et le deuxième appareil (N1 à N5) à l'aide d'un classificateur de Bayes, notamment d'un classificateur de Bayes naïf.

6. Procédé suivant l'une des revendications 3 à 5, **caractérisé en ce que** l'on calcule la mesure de la confiance à partir du rapport des interactions satisfaisantes entre le premier et le deuxième appareil (N1 à N5) par rapport à toutes les interactions entre le premier et le deuxième appareil (N1 à N5).

7. Procédé suivant la revendication 6, **caractérisé en ce que** l'on détermine un degré de la satisfaction sous la forme d'une somme pondérée de la satisfaction de tous les nombres de mesure.

8. Procédé suivant la revendication 7, **caractérisé en ce que** l'on détermine, pour chaque paire de premier et de deuxième appareil (N1 à N5), au moins une valeur de seuil du degré de satisfaction, par le fait que le premier appareil calcule une prédiction à partir de données du deuxième appareil, qui reçoit, pour cette prédiction, un feedback du réseau (CN) de nuage et en calcule une valeur de seuil au moyen d'un apprentissage automatique.

9. Procédé suivant l'une des revendications 3 à 8, **caractérisé en ce que** l'on soumet la mesure de la confiance à un vieillissement par le fait que la mesure de la confiance se compose d'une somme pondérée de mesures historiques, des mesures plus récentes étant pondérées davantage que des mesures plus anciennes.

10. Procédé suivant l'une des revendications précédentes, **caractérisé en ce que**, dans la détermination du deuxième appareil (N1 à N5), on interroge un repository du deuxième appareil.

11. Procédé suivant l'une des revendications précédentes, **caractérisé en ce que**, dans la détermination du deuxième appareil (N1 à N5) on utilise un filtre bloom.

12. Produit de programme d'ordinateur, comprenant des instructions qui, lors de la réalisation du programme par au moins un premier appareil (N1 à N5) d'un réseau (EN) local, font que cet appareil effectue tous les stades du procédé suivant l'une des revendications 1 à 11.

FIG 1

| IoT Cloud Platform |
| IoT Platform Connectivity |
| Edge Services & Apps Overlay |
| Semantic IoT Device Overlay |

CN

N1 M
N2 M
N3 M
N4 M
N5 M

FIG 2

| N2 | $\xrightarrow{D}$ | N1 | — Pred — | BE |

FB

FIG 3

| ID | RT | R | QoI | Label |
|-----|------|-----|-------|-------|
| 1 | RT_1 | R_1 | QoI_1 | OK |
| 2 | RT_2 | R_2 | QoI_2 | NOK |
| ... | ... | ... | ... | ... |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON AL-KINANI et al.** *Adaptive Advisory Systems for Oil and Gas Operations*